Europäisches Patentamt

European Patent Office

Office européen des brevets

(11) Veröffentlichungsnummer: **0 293 640 B1**

(12) **EUROPÄISCHE PATENTSCHRIFT**

(45) Veröffentlichungstag der Patentschrift: **18.03.92**

(21) Anmeldenummer: **88107429.8**

(22) Anmeldetag: **09.05.88**

(51) Int. Cl.⁵: **C01B 33/32**

(54) Verfahren zur Herstellung von kristallinen Natriumsilikaten mit Schichtstruktur.

(30) Priorität: **01.06.87 DE 3718350**

(43) Veröffentlichungstag der Anmeldung:
**07.12.88 Patentblatt 88/49**

(45) Bekanntmachung des Hinweises auf die
Patenterteilung:
**18.03.92 Patentblatt 92/12**

(84) Benannte Vertragsstaaten:
**AT BE CH DE ES FR GB IT LI NL SE**

(56) Entgegenhaltungen:
**EP-A- 0 164 552**
**DE-A- 3 413 571**

(73) Patentinhaber: **HOECHST AKTIENGESELL-
SCHAFT**
**Postfach 80 03 20**
**W-6230 Frankfurt am Main 80(DE)**

(72) Erfinder: **Schimmel, Günther, Dr.**
**Ehrenstrasse 16**
**W-5042 Erftstadt(DE)**
Erfinder: **Gradl, Reinhard, Dr.**
**Heimbacher Weg 27**
**W-5042 Erftstadt(DE)**
Erfinder: **Schott, Martin, Dr.**
**Königsteiner Strasse 7**
**W-6374 Steinbach(DE)**

**Beschreibung**

Die vorliegende Erfindung betrifft ein Verfahren zur Herstellung von kristallinen Natriumsilikaten mit Schichtstruktur und einem Molverhältnis $SiO_2/Na_2O$ von 1,9 : 1 bis 3,5 : 1 aus Wasserglaslösungen mit einem Feststoffgehalt von 20 bis 65 Gewichts%.

Beim Verfahren zur Herstellung von kristallinen Natriumsilikaten nach der US-PS 4 585 642 wird zu flüssigem oder festem Natriumdisilikat mit einem Wassergehalt von 5 bis 95 Gewichts% wenig kristallines Natriumsilikat zugesetzt, bevor die Reaktionsmischung entwässert und solange bei einer Temperatur von 450°C bis knapp unterhalb des Schmelzpunktes gehalten wird, bis das gesamte Natriumsilikat kristallisiert ist.

Weiterhin ist aus der US-PS 4 664 839 bekannt, daß unter den verschiedenen Kristallmodifikationen der kristallinen Schichtsilikate der Formel $Na_2Si_2O_5$ die $\delta$-Form das höchste Kationenaustauschvermögen besitzt und daher zur Wasserenthärtung besonders geeignet ist.

Nachteilig ist bei dem bekannten Verfahren, daß beim Entwässern des amorphen Natriumsilikates ein fester voluminöser Silikatschaum entsteht. Darüber hinaus wird beim Tempern des entwässerten Natriumsilikates ein Temperaturbereich von 580 bis 630°C durchlaufen, in welchem das Natriumsilikat auf Grund einer exothermen Reaktion kurzfristig anschmilzt und dabei extrem harte, großvolumige Aggregate bildet. In beiden Verfahrensschritte besteht daher die Gefahr, daß kontinuierlich arbeitende Apparate verstopfen. Schließlich bedeutet die nach beiden Verfahrensschritten erforderliche Mahlung des jeweiligen Produktes einen großen Kostenaufwand.

Es ist daher Aufgabe der vorliegenden Erfindung, ein Verfahren anzugeben, welches eine störungsfreie kontinuierliche Herstellung von kristallinem Natriumsilikat mit Schichtstruktur in der $\delta$-Modifikation aus Wasserglaslösungen mit nur geringfügigem mechanischem Zerkleinerungsaufwand erlaubt. Das wird erfindungsgemäß dadurch erreicht, daß man

a) die Wasserglaslösungen in einer Sprühtrocknungszone unter Bildung eines pulverförmigen amorphen Natriumsilikates mit maximal 20 Gewichts% Glühverlust behandelt, wobei das die Sprühtrocknungszone verlassende Abgas eine Temperatur von mindestens 140°C aufweist,

b) das sprühgetrocknete Natriumsilikat in einer Glühzone mit bewegter Feststoffschicht bei Temperaturen von 500 bis 800°C 1 bis 60 Minuten in Gegenwart von mindestens 10 Gewichtsprozent eines Rückgutes tempert, welches durch mechanische Zerkleinerung von aus der Glühzone ausgetragenem kristallinem Natriumsilikat erhalten wurde.

Das Verfahren gemäß der Erfindung kann wahlweise auch noch dadurch ausgestaltet sein, daß

a) man bis zu 50 Gewichtsprozent von aus der Glühzone ausgetragenem kristallinem Natriumsilikat nach mechanischer Zerkleinerung in die Glühzone zurückführt;

b) das mechanisch zerkleinerte, kristalline Natriumsilikat Korngrößen von 10 bis 1000 $\mu$m aufweist;

c) man die Sprühtrocknung der Wasserglaslösungen sowie die Temperung des Natriumsilikates gemeinsam in einem direkt befeuerten Drehrohrofen durchführt;

d) man die Wasserglaslösungen am nichtbefeuerten Ende des Drehrohrofens eindüst, während das getemperte Natriumsilikat an der Flammenseite des Drehrohrofens austritt;

e) der Drehrohrofen gegenüber der Horizontale um 0,5 bis 5°, vorzugsweise um 1 bis 2°, geneigt ist;

f) das sprühgetrocknete Natriumsilikat einen maximalen Glühverlust von 5 Gewichts% aufweist;

g) die Menge des in die Glühzone zurückgeführten kristallinen Natriumsilikates um so größer ist, je höher der Glühverlust des sprühgetrockneten Natriumsilikates ist.

Die mit dem erfindungsgemäßen Verfahren erhaltenen kristallinen Natriumsilikate weisen bei pH-Werten von 10,0 bis 10,5 ein Kalkbindevermögen von mehr als 360 mval Ca/100 g (bei 20°C) bzw. von mehr als 600 mval Ca/100 (bei 60°C) auf, während ihr Magnesiumbindevermögen im gleichen pH-Wert-Intervall mehr als 580 mval Mg/100 g (bei 20°C) bzw. mehr als 1000 mval Mg/100 g (bei 60°C) beträgt.

Beim Verfahren gemäß der Erfindung kann im Zuge der Sprühtrocknung durch die Änderung der Konzentration der Wasserglaslösung und durch Steuerung der Sprühtemperatur die Qualität des anfallenden amorphen Natriumdisilikat-Pulvers in einem weiten Bereich beeinflußt werden. So lassen sich beispielsweise die erfindungsgemäß in der Glühzone zu behandelnden amorphen Natriumsilikat-Pulver mit einem Wassergehalt von 1 bis 20 Gewichts% in einem Heißluftsprühturm aus Wasserglaslösungen mit einem Modul ($SiO_2 : Na_2O$-Verhältnis) von 2 herstellen.

Vorteilhaft läßt sich das erfindungsgemäße Verfahren in einem einzigen Apparat durchführen, welcher die Schritte Versprühen der Wasserglaslösung, Tempern in bewegter Schicht und Rückführung von kristallinem Natriumsilikat in die Glühzone ermöglicht. Hierzu sind ein mit Heißgas betriebener Drehrohrofen oder ein Wirbelschichtreaktor geeignet, in welche Wasserglaslösung eingesprüht und gleichzeitig kristallines Natriumsilikat eindosiert wird. Bevorzugt wird ein direkt mit Öl oder Gas befeuerter Drehrohrofen, wobei die Einspeisung und der Austrag unterschiedlich angeordnet sein können und wobei entsprechend der Neigung des Ofens in bezug auf die Horizontale der Austrag nach kürzerer oder längerer Temperzeit erfolgt.

In den folgenden Beispielen, in denen die Erfindung näher beschrieben wird, wurde des Kalk- und Magnesium-Bindevermögen der erhaltenen kristallinen Natriumsilikate mit Schichtstruktur wie folgt ermittelt: 1 l destilliertes Wasser wurde mit Lösungen von $CaCl_2$ (entsprechend 300 mg CaO) oder $MgCl_2$ - (entsprechend 216 mg MgO) versetzt, wodurch ein Wasser mit 30 °d erhalten wurde.

Zu 1 l dieses Wassers, welches entweder auf 20 oder 60°C temperiert war, wurden 1 g des in den Beispielen 2 bis 7 erhaltenen kristallinen Natriumsilikates sowie 0 bis 6 ml einer 1-molaren Glykokoll-Lösung (erhalten aus 75,1 g Glykokoll und 58,4 g NaCl, welche mit Wasser zu 1 l gelöst wurden) gegeben, wonach sich ein pH-Wert von 10,4 einstellte. Die Suspension wurde 30 Minuten gerührt, währenddessen der pH-Wert stabil blieb. Schließlich wurde abfiltriert und im Filtrat das in Lösung verbliebene Calcium und Magnesium komplexometrisch bestimmt. Durch Differenzbildung mit den ursprünglichen Gehalten wurde das Kalkund Magnesium-Bindevermögen ermittelt.

Die Ergebnisse für die Beispiele 2 bis 7 sind in der beigefügten Tabelle zusammengefaßt.

Beispiel 1 (Vergleichsbeispiel)

Aus einer Wasserglaslösung mit 45 % Feststoffgehalt und dem Modul 2 wurde in einem Heißluftsprühturm (Abgastemperatur: 145°C) amorphes Natriumdisilikat erzeugt, welches einen Glühverlust von 19 % aufwies. Das amorphe Natriumdisilikat wurde über eine Dosierschnecke in einer Menge von 2 kg/h in die Stirnwand eines von außen elektrisch beheizten Drehrohrofens (Länge: 3 m; Durchmesser: 22 cm; Neigung: 1,6°) eindosiert, wobei die Verweilzeit im Ofen etwa 45 Minuten und die Temperatur an seiner heißesten Stelle 720°C betrug.

Nachdem sich das Material im Drehrohrofen zunächst stark aufblähte, begann es beim Erreichen der etwa 550°C heißen Zone an den Wandungen zu kleben, wobei sich große Lappen bildeten, welche sich zu Klumpen von etwa 10 cm Durchmesser aufrollten. Der Drehrohrofen wurde durch die Klumpen so stark verstopft, daß der Materialfluß in ihm nur durch ständiges Stochern aufrechterhalten werden konnte. Nach zweistündiger Betriebszeit war der Querschnitt des Drehrohrofens fast vollständig zu, so daß der Versuch abgebrochen werden mußte.

Beispiel 2 (Vergleichsbeispiel)

Das amorphe Natriumdisilikat wurde wie in Beispiel 1 hergestellt. Das amorphe Natriumdisilikat wurde über eine Dosierschnecke in einen direkt befeuerten Drehrohrofen (Länge: 5 m; Durchmesser: 78 cm; Neigung: 1,2°) an seinem der Flamme gegenüberliegenden Ende aufgegeben, während das kristalline Produkt an der Flammseite ausgetragen wurde. Stündlich wurden 25 kg amorphes Natriumdisilikat dosiert; die Temperatur an der heißesten Stelle des Drehrohrofens betrug 740°C.

An der Wand des Drehrohrofens bildeten sich Verklebungen, welche mechanisch abgestoßen werden mußten. Dabei entstanden Agglomerate mit bis zu etwa 20 cm Durchmesser.

Beispiel 3 (Vergleichsbeispiel)

Es wurde analog Beispiel 2 verfahren; jedoch wurden 60 kg/h amorphes Natriumdisilikat und gleichzeitig 5 kg/h eines Rückgutes dosiert, welches durch Zerkleinern des nach Beispiel 2 erhaltenen Produktes auf weniger als 250 $\mu$m erhalten worden war.

An der Wand des Drehrohrofens zeigten sich nur noch schwache Verklebungen, welche durch gelegentliches Klopfen entfernbar waren. Die größten auftretenden Agglomerate wiesen einen Durchmesser von etwa 8 cm auf.

Beispiel 4 (gemäß der Erfindung)

Beispiel 3 wurde mit der Abänderung wiederholt, daß 15 kg/h Rückgut dosiert wurden.
An der Wand des Drehrohrofens bildeten sich keine Verklebungen; das ausgetragene kristalline Natriumsilikat war weitgehend pulverförmig.

Beispiel 5 (gemäß der Erfindung)

Es wurde eine Wasserglaslösung mit 55 % Feststoffgehalt und dem Modul 2 in einem Heißluftsprühturm versprüht, wobei die Abgastemperatur 230°C betrug und ein amorphes Natriumdisilikat mit einem Glühverlust von 4,7 % erhalten wurde.

Das amorphe Natriumdisilikat wurde in einer Menge von 40 kg/h zusammen mit 4 kg/h Rückgut in einen gasbefeuerten Drehrohrofen (Neigung: 1,2°) dosiert. Im Drehrohrofen bildeten sich keine Anbackungen; das ausgetragene kristalline Natriumsilikat war im wesentlichen pulverförmig.

Beispiel 6 (gemäß der Erfindung)

Die Wasserglaslösung gemäß Beispiel 5 wurde durch die Flamme eines direkt befeuerten Sprühturmes versprüht. Bei einer Abgastemperatur von 450°C fiel dabei ein amorphes Natriumdisilikat mit einem Glühverlust von 1,4 % an.

Das amorphe Natriumdisilikat wurde wie in Beispiel 5 angegeben zusammen mit Rückgut getempert. Auch dabei bildeten sich im Drehrohrofen keine Anbackungen und es resultierte ein im wesentlichen pulverförmiges kristallines Natriumsilikat.

Beispiel 7 (gemäß der Erfindung)

Der in Beispiel 2 beschriebene Drehrohrofen wurde an seiner Produkteintragsseite zusätzlich mit einem Sprühsystem ausgestattet, durch welches stündlich 50 l einer 50 %igen Wasserglaslösung versprüht wurden. Gleichzeitig wurden über ein Feststoffdosiersystem 5 kg/h Rückgut im Gleichstrom mit der versprühten Wasserglaslösung eingetragen. Die Abgastemperatur betrug 220°C und die Temperatur an der heißesten Stelle des Drehrohrofens 750°C. Das primäre Sprühprodukt wies einen Glühverlust von 4,8 % auf. An der Wand des Drehrohrhofens bildeten sich keine Verklebungen. Die größten Agglomerate im ausgetragenen kristallinen Natriumsilikat hatten einen Durchmesser von etwa 3 cm.

EP 0 293 640 B1

T a b e l l e

Kalk- und Magnesium-Bindevermögen kristalliner Natriumsilikate mit Schichtstruktur bei pH 10,4

| Gemäß Beispiel | Kalk-Bindevermögen [ mgCa/g ] | | Magnesium-Bindevermögen [ mgMg/g ] | |
|---|---|---|---|---|
| | bei 20°C | bei 60°C | bei 20°C | bei 60°C |
| 2 | 68 | 114 | 66 | 120· |
| 3 | 72 | 120 | 70 | 124 |
| 4 | 74 | 123 | 72 | 128 |
| 5 | 78 | 126 | 74 | 130 |
| 6 | 76 | 124 | 74 | 130 |
| 7 | 75 | 124 | 73 | 128 |

**Patentansprüche**

1. Verfahren zur Herstellung von kristallinen Natriumsilikaten mit Schichtstruktur und einem Molverhältnis $SiO_2/Na_2O$ von 1,9 : 1 bis 3,5 : 1 aus Wasserglaslösungen mit einem Feststoffgehalt von 20 bis 65 Gewichts%, dadurch gekennzeichnet, daß man

a) die Wasserglaslösungen in einer Sprühtrocknungszone unter Bildung eines pulverförmigen amorphen Natriumsilikates mit maximal 20 Gewichts% Glühverlust behandelt, wobei das die Sprühtrocknungszone verlassende Abgas eine Temperatur von mindestens 140°C aufweist,

b) das sprühgetrocknete Natriumsilikat in einer Glühzone mit bewegter Feststoffschicht bei Temperaturen von 500 bis 800°C 1 bis 60 Minuten in Gegenwart von mindestens 10 Gewichtsprozent eines Rückgutes tempert, welches durch mechanische Zerkleinerung von aus der Glühzone ausgetragenem kristallinem Natriumsilikat erhalten wurde.

2. Verfahren nach Anspruch 1, dadurch gekennzeichnet, daß man bis zu 50 Gewichtsprozent von aus der Glühzone ausgetragenem kristallinem Natriumsilikat nach mechanischer Zerkleinerung in die Glühzone zurückführt.

3. Verfahren nach Anspruch 1 oder 2, dadurch gekennzeichnet, daß das mechanisch zerkleinerte, kristalline Natriumsilikat Korngrößen von 10 bis 1000 $\mu$m aufweist.

4. Verfahren nach mindestens einem der Ansprüche 1 bis 3, dadurch gekennzeichnet, daß man die Sprühtrocknung der Wasserglaslösungen sowie die Temperung des Natriumsilikates gemeinsam in einem direkt befeuerten Drehrohrofen durchführt.

5. Verfahren nach Anspruch 4, dadurch gekennzeichnet, daß man die Wasserglaslösungen am nichtbefeuerten Ende des Drehrohrofens eindüst, während das getemperte Natriumsilikat an der Flammenseite des Drehrohrofens austritt.

6. Verfahren nach Anspruch 4 oder 5, dadurch gekennzeichnet, daß der Drehrohrofen gegenüber der Horizontale um 0,5 bis 5°, vorzugsweise um 1 bis 2°, geneigt ist.

7. Verfahren nach mindestens einem der Ansprüche 1 bis 6, dadurch gekennzeichnet, daß das sprühgetrocknete Natriumsilikat einen maximalen Glühverlust von 5 Gewichts% aufweist.

8. Verfahren nach mindestens einem der Ansprüche 1 bis 7, dadurch gekennzeichnet, daß die Menge des in die Glühzone zurückgeführten kristallinen Natriumsilikates um so größer ist, je höher der Glühverlust des sprühgetrockneten Natriumsilikates ist.

**Claims**

1. A process for the preparation of crystalline sodium silicates having a layer structure and an $SiO_2/Na_2O$ molar ratio of 1.9 : 1 to 3.5 : 1 from waterglass solutions having a solids content of 20 to 65% by weight, which comprises

a) treating the waterglass solutions in a spray-drying zone with formation of a pulverulent amorphous sodium silicate having a maximum ignition loss of 20% by weight, the waste gas leaving the spray-drying zone having a temperature of at least 140°C, and

b) heating the spray-dried sodium silicate in an ignition zone containing an agitated solid bed at temperatures of 500 to 800°C for 1 to 60 minutes in the presence of at least 10% by weight of a recycled material obtained by mechanical comminution of crystalline sodium silicate discharged from the ignition zone.

2. A process as claimed in claim 1, wherein up to 50% by weight of crystalline sodium silicate discharged from the ignition zone is recycled to the ignition zone after mechanical comminution.

3. A process as claimed in claim 1 or 2, wherein the mechanically comminuted, crystalline sodium silicate has particle sizes of 10 to 1,000 $\mu$m.

4. A process as claimed in at least one of claims 1 to 3, wherein the spray drying of the waterglass solutions and the heating of the sodium silicate are carried out together in a directly fired rotary tubular kiln.

5. A process as claimed in claim 4, wherein the water-glass solutions are sprayed in at the non-fired end of the rotary tubular kiln, while the heated sodium silicate emerges at the fired side of the rotary tubular kiln.

6. A process as claimed in claim 4 or 5, wherein the rotary tubular kiln is inclined 0.5 to 5°, preferably 1 to 2°, to the horizontal.

7. A process as claimed in at least one of claims 1 to 6, wherein the spray-dried sodium silicate has a maximum ignition loss of 5% by weight.

8. A process as claimed in at least one of claims 1 to 7, wherein the amount of crystalline sodium silicate recycled to the ignition zone is greater the higher the ignition loss of the spray-dried sodium silicate.

**Revendications**

1. Procédé de fabrication de silicates de sodium cristallins à structure feuilletée et présentant un rapport molaire $SiO_2/Na_2O$ de 1,9 : 1 à 3,5 : 1 à partir de solutions de verre soluble ayant une teneur en matières solides de 20 à 65% en poids, caractérisé en ce que :
   a) on traite les solutions de verre soluble dans une zone de séchage par pulvérisation avec formation d'un silicate de sodium amorphe pulvérulent présentant au maximum 20% en poids de pertes par calcination, le gaz résiduaire quittant la zone de séchage par pulvérisation présentant une température d'au moins 140°C ;
   b) on soumet le silicate de sodium séché par pulvérisation à un traitement thermique dans une zone de calcination à couche de matières solides agitée à des températures de 500 à 800°C pendant 1 à 60 min en présence d'au moins 10% en poids d'un produit de retour que l'on a obtenu par broyage mécanique du silicate de sodium cristallin extrait de la zone de calcination.

2. Procédé selon la revendication 1, caractérisé en ce que l'on recycle dans la zone de calcination jusqu'à 50% en poids du silicate de sodium cristallin extrait de la zone de calcination après broyage mécanique.

3. Procédé selon la revendication 1 ou 2, caractérisé en ce que le silicate de sodium cristallin broyé mécaniquement présente des tailles de grains de 10 à 1 000 $\mu$m.

4. Procédé selon au moins l'un des revendications 1 à 3, caractérisé en ce que l'on effectue le séchage par pulvérisation des solutions de verre soluble et le traitement thermique du silicate de sodium en commun dans un four tubulaire rotatif à chauffage direct.

5. Procédé selon la revendication 4, caractérisé en ce que l'on injecte les solutions de verre soluble à l'extrémité non chauffée du four tubulaire rotatif tandis que le silicate de sodium qui a subi le traitement thermique sort du côté de la flamme du four tubulaire rotatif.

6. Procédé selon la revendication 4 ou 5, caractérisé en ce que le four tubulaire rotatif est incliné par rapport à l'horizontale de 0,5 à 5°, de préférence de 1 à 2°.

7. Procédé selon au moins l'une des revendications 1 à 6, caractérisé en ce que le silicate de sodium séché par pulvérisation présente des pertes par calcination maximales de 5% en poids.

8. Procédé selon au moins l'une des revendications 1 à 7, caractérisé en ce que la quantité de silicate de sodium cristallin recyclé dans la zone de calcination est d'autant plus grande que les pertes par calcination en silicate de sodium séché par pulvérisation sont importantes.